# EUROPÄISCHE PATENTSCHRIFT

(11) **EP 1 018 283 B1**
(45) Veröffentlichungstag und Bekanntmachung des Hinweises auf die Patenterteilung: **19.04.2006**
(21) Anmeldenummer: 98954211.3
(22) Anmeldetag: 21.09.1998
(51) Int. Cl.: H04Q 7/38, H04Q 7/32, H04M 3/54, H04Q 7/24

(54) **KOMMUNIKATIONSENDGERÄT ZUR DRAHTLOSEN KOMMUNIKATION MIT SENDE-/EMPFANGSBASISSTATIONEN UNTERSCHIEDLICHER KOMMUNIKATIONSSYSTEME**
COMMUNICATION TERMINAL FOR WIRELESS COMMUNICATION WITH TRANSMITTING/RECEIVING STATIONS IN VARIOUS COMMUNICATION SYSTEMS
TERMINAL DE TELECOMMUNICATION POUR LA COMMUNICATION SANS FIL AVEC DES STATIONS EMETTRICES/RECEPTRICES DE DIVERS SYSTEMES DE COMMUNICATION

(30) Priorität: 26.09.1997 DE 19742580
(43) Veröffentlichungstag der Anmeldung: 12.07.2000
(73) Patentinhaber: SIEMENS AKTIENGESELLSCHAFT, 80333 München (DE)
(72) Erfinder: MALER, Klaus, D-80687 München (DE)
(86) Internationale Anmeldenummer: PCT/DE1998/002803
(87) Internationale Veröffentlichungsnummer: WO 1999/017578

(56) Entgegenhaltungen:
- EP-A- 0 738 093
- WO-A-97/21315
- DE-A- 4 343 335
- GB-A- 2 282 731
- US-A- 5 506 887
- US-A- 5 590 174

## Beschreibung

Die Erfindung betrifft ein Kommunikationsendgerät zur drahtlosen Kommunikation mit Sende/Empfangsstationen von Kommunikationssystemen. Solche Kommunikationsendgeräte sind bekannt und arbeiten beispielsweise gemäß einem Schnurloskommunikationsstandard wie zum Beispiel DECT oder gemäß einem Mobilfunkstandard wie zum Beispiel einem der Standards GSM, DCS-1800 oder CDMA. Neben solchen, auf Funkbasis kommunizierenden Kommunikationsendgeräten, gibt es auch Kommunikationsendgeräte, die auf der Basis der Infrarotübertragung kommunizieren. Ein Kommunikationssystem für ein nach dem DECT- Standard arbeitendes Kommunikationsendgerät ist beispielsweise eine als Teilnehmereinrichtung an einem öffentlichen Kommunikationsnetz betriebene einzelne Sende-/Empfangsbasisstation mit Rufsteuerung, oder eine Kommunikationsnebenstellenanlage mit mehreren Sende-/Empfangsbasisstationen und einer Vermittlungseinrichtung. Solche Kommunikationsendgeäte gemäß DECT-Standard können üblicherweise an mehreren solcher Kommunikationssysteme jeweils als zugriffsberechtigt angemeldet werden und betrieben werden. Kommunikationsendgräte, die nach einem der oben genannten Mobilfunkstandards arbeiten, werden üblicherweise an Mobilfunknetzen betrieben. Ein Kommunikationssystem gemäß der oben genannten Definition für Mobilfunkendgräte ist ein solches Mobilfunknetz.

Es gibt auch Kommunikationsendgeräte für Mobilfunkbetrieb, die entweder an zwei gemäß unterschiedlichen Standards arbeitenden Mobilfunknetzen betreibbar sind oder die in einer Betriebsweise als Schnurlosendgerät gemäß einem Schnurlosstandard betreibbar sind und in einer anderen Betriebsweise als Mobilfunkendgerät gemäß einem Mobilfunkstandard. Solche Kommunikationsendgeräte werden üblicherweise als mobiles Dualmode-Kommunikationsendgerät bezeichnet.

Wird ein nach einem der oben genannten Prinzipien arbeitendes Kommunikationsendgerät an mehreren Kommunikationssystemen jeweils als Teilnehmereinrichtung betrieben, so ist es in diesen Kommunikationssystemen häufig über unterschiedliche Netzadressen (Rufnummern) erreichbar. Ein zu einer dieser Netzadressen adressierter Verbindungsaufbauversuch geht folglich ins Leere, sofern das Kommunikationsendgerät nicht an einer Sende-/Empfangsbasisstation des zugeordneten Kommunikationssystems als erreichbar angemeldet ist und sofern das Kommunikationssystem, an dessen Sende-/Empfangsbasisstation das Kommunikationsendgerät als erreichbar angemeldet ist, keine Information bezüglich des Aufenthaltsortes dieses Kommunikationsendgeräts an das Kommunikationssystem übermittelt hat, in dem das Kommunikationsendgerät unter dieser Netzadresse erreichbar ist.

Aus den EP 0 738 093 A2, US 5,506 887 und WO 97/21315 ist jeweils ein Kommunikationsendgerät zur drahtlosen Kommunikation mit einer von mindestens zwei Sende-/Empfangsbasisstationen mindestens zweier Kommunikationssysteme bekannt, in deren Sende-/Empfangsbereich sich das Kommunikationsendgerät befindet und bei dem als aktuell empfangsbereit gemeldet ist. Das Kommunikationsendgerät weist eine Erkennungseinrichtung zum Erkennen, zu welchem Kommunikationssystem die Sende-/Empfangsbasisstation gehört, bei der das Kommunikationsendgerät sich als aktuell empfangsbereit anmeldet, auf.

Aus der DE-43 43 335 A1 ist ein Verfahren zum Erreichen von Fernsprechteilnehmern in festen und mobilen Fernsprechnetzen unter Verwendung eines Mobiltelefons bekannt, bei dem bei der Erstinstallation des Mobiltelefons die Ortskennziffer oder -zahl eines festen Anschlusses des festen Fernsprechnetzes und die Durchwahlkennziffer einer Fernsprechvermittlungsanlage, die an ein öffentliches, digital arbeitendes Netz angeschlossen ist, in die Programmspeichereinrichtungen des Mobiltelefons einprogrammiert oder eingespeichert wird. Das hierfür vorgesehene Programm ist so ausgestaltet, daß je nach dem wo bzw. an welchem Netzanschlußpunkt sich das Mobiltelefon gerade befindet, durch Manipulation dieser Ziffern oder Zahlen die zur Herstellung der notwendigen Anschlußcodes notwendigen Umleitungen durchgeführt werden. So ist im "angerufenen" Fall eine Rufsteuerung vorgesehen, die automatisch eine Rufumleitung aktiviert, wenn sich das Mobiltelefon nicht mehr im Versorgungsbereich eines DECT-Netzes befindet. Diese Rufumleitung kann auch jederzeit wieder rückgängig gemacht werden, wenn eine Erreichbarkeit des Mobiltelefons nicht gewünscht ist.

Aufgabe der vorliegenden Erfindung ist es, ein Kommunikationsendgerät bereitzustellen, das die Anzahl solcher erfolgloser Anrufversuche vermindert.

Diese Aufgabe löst die Erfindung durch ein Kommunikationssystem mit den Merkmalen des Anspruches 1 oder durch ein Kommunikationssystem mit den Merkmalen des Anspruches 2.

Günstige Weiterbildungen sind in den Unteransprüchen beschrieben.

Ein Kommunikationsendgerät zur drahtlosen Kommunikation mit einer von mindestens zwei Sende-/Empfangsbasisstationen mindestens zweier Kommunikationssysteme, in deren Sende-/Empfangsbereich sich das Kommunikationsendgerät befindet und bei dem es als aktuell empfangsbereit gemeldet ist hat eine Erkennungseinrichtung zum Erkennen, zu welchem Kommunikationssystem die Sende-/Empfangsbasisstation gehört, bei der das Kommunikationsendgerät sich als aktuell empfangsbereit anmeldet. Ein solches Kommunikationsendgerät enthält eine Steuereinrichtung, um dem erkannten Kommunikationssystem eine Netzadresse zuzuordnen, unter der das Kommunikationsendgerät aktuell erreichbar ist, und um, wenn sich das Kommunikationsendgerät gerade als aktuell empfangsbereit an einer Sende-/Empfangsbasisstation angemeldet hat, über diese Sende-/Empfangsbasisstation an eine im Kommunikationsendgerät gespeicherte Steuerungsnetzadresse die Netzadresse zu übermitteln, unter der es aktuell erreichbar ist.

Ein gemäß diesem Erfindungsaspekt ausgestaltetes Kommunikationsendgerät versorgt eine über eine Steueradresse erreichbare Steuerung mit der aktuell gültigen Netzadresse, also mit der Netzadresse, unter der das Kommunikationsendgerät und somit üblicherweise der Teilnehmer, dem dieses zugeordnet ist, erreichbar ist.

Gemäß einem anderen Aspekt der Erfindung wird die oben genannte Aufgabe durch ein Kommunikationsendgerät zur drahtlosen Kommunikation mit einer von mindestens zwei Sende-/Empfangsbasisstationen mindestens zweier Kommunikationssysteme gelöst, in deren Sende-/Empfangsbereich sich das Kommunikationsendgerät befindet und bei dem es als aktuell empfangsbereit gemeldet ist. Auch dieses Kommunikationsendgerät hat eine Erkennungseinrichtung zum Erkennen, zu welchem Kommunikationssystem die Sende-/Empfangsbasisstation gehört, bei der das Kommunikationsendgerät sich als aktuell empfangsbereit anmeldet. Erfindungsgemäß enthält dieses Kommunikationsendgerät eine Steuereinrichtung, um dem erkannten Kommunikationssystem eine Netzadresse zuzuordnen, unter der das Kommunikationsendgerät aktuell erreichbar ist, und um, wenn sich das Kommunikationsendgerät gerade als aktuell empfangsbereit an einer Sende-/Empfangsbasisstation angemeldet hat, über diese Sende-/Empfangsbasisstation an eine im Kommunikationsendgerät gespeicherte Steuerungsnetzadresse eine Steuerinformationen zum Beeinflussen des Aktivierungs-/Deaktivierungszustands eines das Kommunikationssystem, zu dem diese Sende-/Empfangsbasisstation nicht gehört betreffenden Leistungsmerkmals zu übermitteln.

Ein solches Kommunikationsendgerät kann bei Verwendung beliebiger Kommunikationssysteme ermöglichen, einen für das Kommunikationsendgerät an ein Kommunikationssystem, über das es aktuell nicht erreichbar ist, gerichteten Ruf einer gewünschten Behandlung zu unterziehen.

Ein solcher Ruf kann beispielsweise durch ein Leistungsmerkmal Rufumleitung zu einer vordefinierten Rufadresse umgeleitet werden oder zu der Netzadresse, unter der das Kommunikationsendgerät aktuell erreichbar ist. Falls nur zwei Adressen zur Auswahl stehen, unter denen das Kommunikationsendgerät erreichbar sein könnte, kann die Umleitungszieladresse voreingestellt sein. Als Umleitungszieladresse kann aber auch eine vom Kommunikationsendgerät mitgeteilte Netzadresse verwendet werden, unter der es aktuell erreichbar ist. In diesem Falle könnte die Steuereinrichtung ausgebildet sein, um mit der Steuerinformation auch die Netzadresse, unter der das Kommunikationsendgerät aktuell erreichbar ist, zu übermitteln.

Vordefinierte Umleitungszieladressen gemäß der einen oben erwähnten Ausgestaltungsform könnten beispielsweise die Adresse einer Sprachmailfunktion, eines Ansagedienstes, eines Mobilitätsservers oder des Endgerätes eines Vertreters sein.

Wenn die Steuereinrichtung in einer Ausgestaltungsform eines solchen Kommunikationsendgeräts eine Steuerinformation zum Aktivieren des Leistungsmerkmals Anrufumleitung bezüglich einer Teilnehmeradresse übermittelt, unter der das Kommunikationsendgerät bei entsprechender Empfangsbereitschaft über ein anderes Kommunikationssystem erreichbar sein würde, so kann diese Steuerinformation beispielsweise an eine Steueradresse dieses Kommunikationssystems gerichtet sein, über das das Kommunikationsendgerät gerade nicht erreichbar ist, um eine Leistungsmerkmalsteuerung dieses Kommunikationssystems zu beeinflussen. Wenn das Kommunikationssystem, über das das Kommunikationsendgerät aktuell erreichbar ist und das Kommunikationssystem, über das das Kommunikationsendgerät gerade nicht erreichbar ist, beide über ein Kommunikationsnetz, wie z.B. ein ISDN-Netz erreichbar sind, das eine Leistungsmerkmalsteuerung für vom Endgerät steuerbare Anrufumleitung bereitstellt, kann die Steuereinrichtung die Steuerinformation auch an diese Leistungsmerkmalsteuerung übermitteln. Darüber hinaus kann das Zustellen kommender Rufe auch von einem Mobilitätsserver vorgenommen werden, der jeweils den aktuellen Aufenthaltsort des Endgerätes kennt. In diesem Falle würde die Netzadresse, unter der das Endgerät aktuell erreichbar ist oder die Steuerinformation an einen solchen Mobilitätsserver übermittelt. Ein solcher Mobilitätsserver kann sowohl an eines der Kommunikationssysteme als auch an ein Kommunikationsnetz angeschlossen sein.

Eine günstige Ausgestaltung eines erfindungsgemäßen Kommunikationsendgeräts enthält demgemäß einen Speicher zum Speichern einer Steuerungsnetzadresse eines Mobilitätsservers.

Eine weitere Ausgestaltung eines erfindungsgemäßen Kommunikationsendgeräts enthält einen Speicher zum Speichern von Steuerungsnetzadressen mehrerer Kommunikationssysteme und eine Auswahleinrichtung zum Auswählen mindestens einer Steuerungsnetzadresse eines Kommunikationssystems, zu dem die Sende-/Empfangsbasisstation, bei der das Kommunikationsendgerät sich als aktuell empfangsbereit angemeldet hat, nicht gehört.

Dadurch sind die Steuerungsnetzadressen aller Kommunikationssysteme, bezüglich denen das Kommunikationsendgerät abhängig von seinem aktuellen Aufenthaltsort Veranlassungen vornimmt, im Kommunikationsendgerät verfügbar. Eventuell erforderliche Aktualisierungen in den einzelnen Kommunikationssystemen sind nicht erforderlich. Jedes Kommunikationssystem braucht nur das Kommunikationsendgerät zu kennen und nur dieses muß an sich ändernde Situationen angepaßt werden.

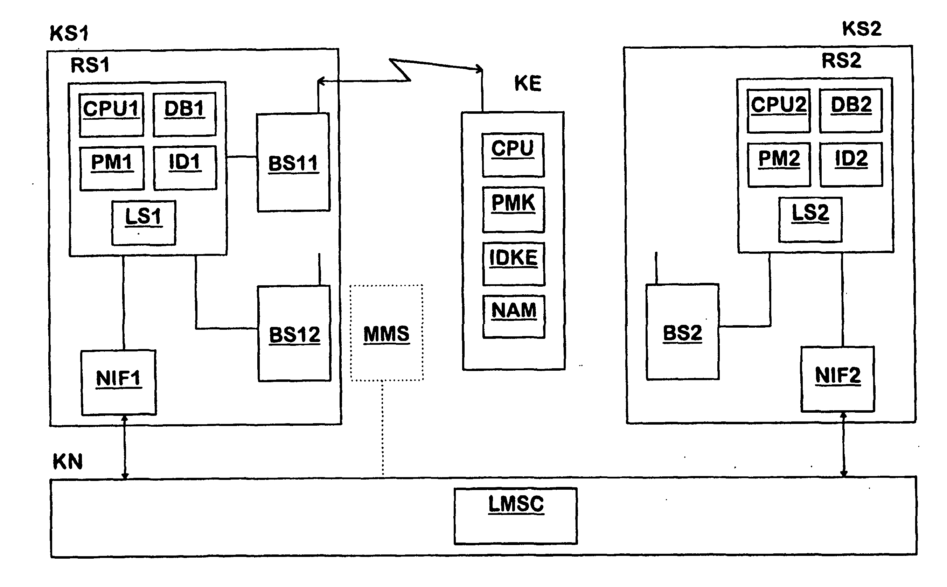

Nachfolgend wird die Erfindung unter Bezugnahme auf die Figur anhand eines Ausführungsbeispieles näher erläutert.

Die Figur zeigt in schematischer Blockdarstellung ein erfindungsgemäßes Kommunikationsendgerät mit über ein Kommunikationsnetz verbindbaren Kommunikationssystemen.

Die Figur zeigt ein Konununiktionsendgrät KE mit einer Steuereinrichtung CPU, einem Programmspeicher PMK, einem Speicher IDKE für eine Kommunikationsendgerätekennung und einem Speicher NAM für Netzadressen, unter denen das Kommunikationsendgerät KE erreichbar ist sowie eine Steuerungsnetzadresse.

Außerdem sind in der Figur zwei Kommunikationssysteme KS1, KS2 dargestellt. Jedes dieser Kommunikationssysteme KS1, KS2 enthält eine Steuereinrichtung CPU1, CPU2, einen Speicher für eine Datenbasis DB1, DB2 für teilnehmerrelevante Daten, einen Programmspeicher PM1, PM2, einen Speicher ID1, ID2 für eine Kommunikationssystemkennung und eine Leistungsmerkmalsteuerung LS1, LS2. Die Leistungsmerkmalsteuerung muß hierbei nicht, wie in der Figur dargestellt, in der Rufsteuerung RS1, RS2 enthalten sein, sondern kann auch parallel zu dieser arbeiten. Eines der Kommunikationssysteme KS1 enthält zwei Sende-/Empfangsbasisstationen BS11, BS12, um drahtlos mit dem Kommunikationsendgerät KE zu kommunizieren. Zwischen der Sende-/Empfangsbasisstation BS11 und dem Kommunikationsendgerät KE ist in der Figur eine Funkverbindung dargestellt.

Das Kommunikationssystem KS2 enthält eine einzige Sende-/Empfangsbasisstation BS2. Sowohl das Kommunikationssystem KS1, als auch das Kommunikationssystem KS2 sind jeweils über eine Netzschnittstelle NIF1, NIF2 an ein Komanunikationsnetz KN angekoppelt und somit miteinander verbindbar. Das Kommunikationsnetz KN enthält, für die Erfindung nicht zwingend erforderlich eine Leistungsmerkmalsteuerung LMSC. In der Figur ist in unterbrochenen Linien außerdem eine Mobilitätsmanagementsteuerung in Form eines Mobilitätsservers MMS dargestellt, der an das Kommunikationsnetz KN angekoppelt ist. Diese Mobilitätsmanagementsteuerung MMS ist optional verwendbar und für die Erfindung nicht unbedingt erforderlich. Außerdem kann diese Mobilitätsmanagementsteuerung MMS auch innerhalb eines der Kommunikationssysteme KS1, KS2 enthalten sein oder an ein solches angeschlossen sein.

Wird das Kommunikationsendgerät KE im Sende-/Empfangsbereich der Sende-/Empfangsbasisstation BS11 des Kommunikationssystems KS1 über diese Sende-/Empfangsbasisstation BS11 am Kommunikationssystem KS1 als aktuell erreichbar angemeldet, so erkennt eine durch die Steuereinrichtung CPU und den Programmspeicher PMK realisierte Erkennungseinrichtung an Hand einer von der Sende-/Empfangsbasisstation BS11 übermittelten, im Speicher ID1 gespeicherte Kommunikationssystemkennung oder an Hand einer Kennung der Sende-/Empfangsbasisstation BS11, zu welchem Kommunikationssystem KS1 die Sende-/Empfangsbasisstation BS11 gehört. Die Steuereinrichtung CPU übermittelt die Netzadresse, über die das Kommunikationsendgerät KE erreichbar ist, über die Netzschnittstelle NIF1 und das Kommunikationsnetz KN an eine Steuerungsnetzadresse. Die Netzadresse, über die das Kommunikationsendgerät KE erreichbar ist und die Steuerungsnetzadresse sind im Netzadressen-Speicher NAM gespeichert.

Als Steuerungsnetzadresse kann in einer ersten Ausgestaltung des Ausführungsbeispiels die Adresse der Leistungsmerkmalsteuerung LMSC des Kommunikationsnetzes KN vorgesehen sein, um das Leistungsmerkmal Anrufumleitung bezüglich der über das Kommunikationssystem KS2 an das Kommunikationsendgerät KE gerichteten Rufe zu aktivieren.

In einer zweiten Ausgestaltung des Ausführungsbeispiels kann als Steuerungsnetzadresse die Adresse der Leistungsmerkmalsteuerung LS2 des Kommunikationssystems KS2 vorgesehen sein, um das Leistungsmerkmal Anrufumleitung bezüglich der über das Kommunikationssystem KS2 an das Kommunikationsendgerät KE gerichteten Rufe zu aktivieren.

In einer dritten Ausgestaltung des Ausführungsbeispiels kann als Steuerungsnetzadresse die Adresse des Mobilitätsservers MMS vorgesehen sein, um über das Kommunikationssystem KS2 an das Kommunikationsendgerät KE gerichteten Rufe über das Kommunikationssystem KS1 an das Kommunikationsendgerät KE zuzustellen.

## Patentansprüche

1. Kommunikationsendgerät (KE) zur drahtlosen Kommunikation mit einer von mindestens zwei Sende-/Empfangsbasisstationen (BS11, BS12, BS2) mindestens zweier Kommunikationssysteme, in deren Sende-/Empfangsbereich sich das Kommunikationsendgerät (KE) befindet und bei dem es als aktuell empfangsbereit gemeldet ist, mit einer Erkennungseinrichtung (CPU, PMK) zum Erkennen, zu welchem Kommunikationssystem (KS1, KS2)die Sende-/Empfangsbasisstation (BS11, BS12, BS2) gehört, bei der das Kommunikationsendgerät (KE) sich als aktuell empfangsbereit anmeldet, **gekennzeichnet durch** eine Steuereinrichtung (CPU, PMK, NAM), um dem erkannten Kommunikationssystem (KS1, KS2)eine Netzadresse zuzuordnen, unter der das Kommunikationsendgerät (KE) aktuell erreichbar ist, und um, wenn sich das Kommunikationsendgerät (KE) gerade als aktuell empfangsbereit an einer Sende-/Empfangsbasisstation (BS11, BS12, BS2) angemeldet hat, über diese Sende-/Empfangsbasisstation (BS11, BS12, BS2) an eine im Kommunikationsendgerät (KE) gespeicherte Steuerungsnetzadresse die Netzadresse zu übermitteln, unter der es aktuell erreichbar ist.

2. Kommunikationsendgerät (KE) zur drahtlosen Kommunikation mit einer von mindestens zwei Sende-/Empfangsbasisstationen (BS11, BS12, BS2) mindestens zweier Kommunikationssysteme (KS1, KS2), in deren Sende-/Empfangsbereich sich das Kommunikationsendgerät (KE) befindet und bei dem es als aktuell empfangsbereit gemeldet ist, mit einer Erkennungseinrichtung (CPU, PMK) zum Erkennen, zu welchem Kommunikationssystem (KS1, KS2)die Sende-/Empfangsbasisstation (BS11, BS12, BS2) gehört, bei der das Kommunikationsendgerät (KE) sich als aktuell empfangsbereit anmeldet, **gekennzeichnet durch** eine Steuereinrichtung (CPU, PMK, NAM), um dem erkannten Kommunikationssystem (KS1, KS2)eine Netzadresse zuzuordnen, unter der das Kommunikationsendgerät (KE) aktuell erreichbar ist, und um, wenn sich das Kommunikationsendgerät (KE)gerade als aktuell empfangsbereit an einer Sende-/Empfangsbasisstation (BS11, BS12, BS2) angemeldet hat, über diese Sende-/Empfangsbasisstation (BS11, BS12, BS2) an eine im Kommunikationsendgerät (KE) gespeicherte Steuerungsnetzadresse eine Steuerinformationen zum Beeinflussen des Aktivierungs-/Deaktivierungszustands eines das Kommunikationssystem, zu dem diese Sende-/Empfangsbasisstation (BS11, BS12, BS2) nicht gehört betreffenden Leistungsmerkmals zu übermitteln.

3. Kommunikationsendgerät (KE)nach Anspruch 2, **dadurch gekennzeichnet, daß** die von der Steuereinrichtung (CPU, PMK, NAM) übermittelte Steuerinformation zum Aktivieren des Leistungsmerkmals Anrufumleitung bezüglich einer Teilnehmeradresse vorgesehen ist, unter der das Kommunikationsendgerät (KE) bei entsprechender Empfangsbereitschaft über das Kommunikationssystem (KS1, KS2) erreichbar ist, zu dem die Sende-/Empfangsbasisstation (BS11, BS12, BS2), bei der das Kommunikationsendgerät (KE) sich als aktuell empfangsbereit angemeldet hat, nicht gehört.

4. Kommunikationsendgerät (KE)nach Anspruch 2 oder 3, **dadurch gekennzeichnet, daß** die Steuereinrichtung (CPU, PMK, NAM) ausgebildet ist, um mit der Steuerinformation auch die Netzadresse, unter der das Kommunikationsendgerät (KE) aktuell erreichbar ist, zu übermitteln.

5. Kommunikationsendgerät (KE) nach einem der vorhergehenden Ansprüche, **gekennzeichnet durch** einen Speicher zum Speichern einer Steuerungsnetzadresse eines Mobilitätsservers (MMS).

6. Komanunikationsendgerät (KE) nach einem der Ansprüche 1 bis 4, **gekennzeichnet durch** einen Speicher zum Speichern von Steuerungsnetzadressen mehrerer Kommunikationssysteme (KS1, KS2) und **durch** eine Auswahleinrichtung zum Auswählen mindestens einer Steuerungsnetzadresse eines Kommunikationssystems, zu dem die Sende-/Empfangsbasisstation (BS11, BS12, BS2), bei der das Kommunikationsendgerät (KE) sich als aktuell empfangsbereit angemeldet hat, nicht gehört.

## Claims

1. Communication terminal (KE) for wireless communication with one of at least two transmitting/receiving base stations (BS11, BS12, BS2) of at least two communication systems, in the transmitting/receiving area of which the communication terminal (KE) is located and with which it is registered as currently ready to receive, having a detection device (CPU, PMK) for detecting to which communication system (KS1, KS2) the transmitting/receiving base station (BS11, BS12, BS2) with which the communication terminal (KE) is registered as currently ready to receive belongs, **characterised by** a control device (CPU, PMK, NAM) for assigning to the detected communication system (KS1, KS2) a network address under which the communication terminal (KE) can currently be accessed and, if the communication terminal (KE) has just registered at a transmitting/receiving base station (BS11, BS12, BS2) as currently ready to receive, for transmitting the network address under which it can currently be accessed via this transmitting/receiving base station (BS11, BS12, BS2) to a network address stored in the communication terminal (KE).

2. Communication terminal (KE) for wireless communication with one of at least two transmitting/receiving base stations (BS11, BS12, BS2) of at least two communication systems (KS1, KS2) in the transmitting/receiving area of which the communication terminal (KE) is located and with which it is registered as currently ready to receive, having a detection device (CPU, PMK) for detecting to which communication system (KS1, KS2) the transmitting/receiving base station (BS11, BS12, BS2) with which the communication terminal (KE) is registered as currently ready to receive belongs, **characterised by** a control device (CPU, PMK, NAM) for assigning to the detected communication system (KS1, KS2) a network address under which the communication terminal (KE) can currently be accessed and, if the communication terminal (KE) has just registered at a transmitting/receiving base station (BS11, BS12, BS2) as currently ready to receive, for transmitting, via this transmitting/receiving base station (BS11, BS12, BS2), control information for influencing the activation/deactivation status of a service feature relating to the communication system to which this transmitting/receiving base station (BS11, BS12, BS2) does not belong to a controller network address stored in the communication terminal (KE).

3. Communication terminal (KE) according to claim 2, **characterised in that** the control information transmitted by the control device (CPU, PMK, NAM) is provided for activating the call diversion service feature relating to a user address under which the communication terminal (KE), if appropriately ready to receive, can be accessed via the communication system (KS1, KS2) to which the transmitting/receiving base station (BS11, BS12, BS2) with which the communication terminal (KE) is currently registered as ready to receive does not belong.

4. Communication terminal (KE) according to claim 2 or 3, **characterised in that** the control device (CPU, PMK, NAM) is embodied also to transmit the network address under which the communication terminal (KE) can currently be accessed along with the control information.

5. Communication terminal (KE) according to one of the preceding claims, **characterised by** a memory for storing a controller network address of a mobility server (MMS).

6. Communication terminal (KE) according to one of the claims 1 to 4, **characterised by** a memory for storing controller network addresses of a plurality of communication systems (KS1, KS2) and by a selection device for selecting at least one controller network address of a communication system to which the transmitting/receiving base station (BS11, BS12, BS2) with which the communication terminal (KE) is registered as currently ready to receive does not belong.

## Revendications

1. Terminal de communication (KE) pour la communication sans fil avec une d'au moins deux stations de base d'émission/réception (BS11, BS12, BS2) d'au moins deux systèmes de communication, dans la zone d'émission/réception desquels se trouve le terminal de communication (KE) et auprès duquel il est déclaré prêt pour la réception actuellement, avec un dispositif de reconnaissance (CPU, PMK) pour reconnaître à quel système de communication (KS1, KS2) appartient la station de base d'émission/réception (BS11, BS12, BS2), auprès de laquelle le terminal de communication (KE) se déclare prêt à recevoir actuellement, **caractérisé par** un dispositif de commande (CPU, PMK, NAM) pour attribuer au système de communication (KS1, KS2) reconnu une adresse de réseau sous laquelle le terminal de communication (KE) peut être joint actuellement, et, lorsque le terminal de communication (KE) s'est déclaré précisément prêt pour la réception actuellement à une station de base d'émission/réception (BS11, BS12, BS2), pour transmettre par cette station de base d'émission/réception (BS11, BS12, BS2) à une adresse de réseau de commande mémorisée dans le terminal de communication (KE) l'adresse de réseau sous laquelle il est joignable actuellement.

2. Terminal de communication (KE) pour la communication sans fil avec une d'au moins deux stations de base d'émission/réception (BS11, BS12, BS2) d'au moins deux systèmes de communication (KS1, KS2), dans la zone d'émission/réception desquels se trouve le terminal de communication (KE) et auprès duquel il s'est déclaré actuellement prêt pour la réception, avec un dispositif de reconnaissance (CPU, PMK) pour reconnaître à quel système de communication (KS1, KS2) la station de base d'émission/réception (BS11, BS12, BS2) appartient, auprès de laquelle le terminal de communication (KE) se déclare prêt à recevoir actuellement, **caractérisé par** un dispositif de commande (CPU, PMK, NAM), afin d'attribuer au système de communication (KS1, KS2) reconnu une adresse de réseau sous laquelle l'appareil dans le terminal de communication (KE) peut être joint actuellement, et, lorsque le terminal de communication (KE) s'est déclaré précisément prêt pour la réception actuellement à une station de base d'émission/réception (BS11, BS12, BS2), de transmettre par l'intermédiaire de cette station de base d'émission/réception (BS11, BS12, BS2) à une adresse de réseau de commande mémorisée dans le terminal de communication (KE) une information de commande pour influencer l'étape d'activation/désactivation d'une option complémentaire concernant le système de communication auquel cette station de base d'émission/réception (BS11, BS12, BS2) n'appartient pas.

3. Terminal de communication (KE) selon la revendication 2, **caractérisé en ce que** l'information de commande transmise par l'appareil de commande (CPU, PMK, NAM) est prévue pour l'activation de l'option complémentaire de transfert d'appel concernant une adresse d'abonné sous laquelle le terminal de communication (KE) peut être joint dans le cas d'une disponibilité de réception correspondante par le système de communication (KS1, KS2), à laquelle la station de base d'émission/réception (BS11, BS12, BS2), auprès de laquelle le terminal de communication (KE) s'est déclaré prêt pour la réception actuellement, n'appartient pas.

4. Terminal de communication (KE) selon la revendication 2 ou 3, **caractérisé en ce que** le dispositif de commande (CPU, PMK, NAM) est réalisé pour transmettre avec l'information de commande également l'adresse de réseau sous laquelle le terminal de communication (KE) peut être joint actuellement.

5. Terminal de communication (KE) selon l'une quelconque des revendications précédentes, **caractérisé par** une mémoire pour la mémorisation d'une adresse de réseau de commande d'un serveur de mobilité (MMS).

6. Terminal de communication (KE) selon l'une quelconque des revendications 1 à 4, **caractérisé par** une mémoire pour la mémorisation d'adresses de réseau de commande de plusieurs systèmes de communication (KS1, KS2) et par un système de sélection pour sélectionner au moins une adresse de réseau de commande d'un système de communication, auquel la station de base d'émission/réception (BS11, BS12, BS2), auprès de laquelle le terminal de communication (KE) s'est déclaré prêt pour la réception actuellement, n'appartient pas.
